Europäisches Patentamt

(19) European Patent Office

Office européen des brevets

(11) Publication number: **0 457 621 A1**

# EUROPEAN PATENT APPLICATION

(21) Application number: **91304491.3**

(22) Date of filing: **17.05.91**

(51) Int. Cl.⁵: **B60P 3/10**

(30) Priority: **18.05.90 GB 9011308**

(43) Date of publication of application:
**21.11.91 Bulletin 91/47**

(84) Designated Contracting States:
**FR GB NL**

(71) Applicant: **WISE HANDLING LIMITED**
**Haworth Road**
**Cullingworth, Bradford, BD13 5DU (GB)**

(72) Inventor: **Watson, John K.**
**c/o Wise Handling Limited, Haworth Road**
**Cullingworth, Bradford BD13 5DU (GB)**
Inventor: **Illingworth, P.S.**
**c/o Wise Handling Limited, Haworth Road**
**Cullingworth, Bradford BD13 5DU (GB)**

(74) Representative: **Wharton, Peter Robert et al**
**Urquhart-Dykes & Lord Alliance House 29-31**
**Kirkgate**
**Bradford West Yorkshire, BD1 1QB (GB)**

(54) **Boat trailer.**

㊼ A boat trailer 10 comprises a base 12 of generally "U" shaped configuration and plan and has wheels 20 at or near the free ends of the "U". Traction means are adapted to be attached to the bight end of the "U" and means for supporting a boat and width adjusting means are provided at or near the bight end of the "U". The width adjusting means comprises transverse arms together forming the bight of the "U" positioned out of the plane of the base constrained to move in guide tube sections located at or near the point of attachment of traction means. Since the arms are positioned out of, or preferably below the general plane of, the base the amount of width reduction which is possible is very high typically of the order of 50% or more. In addition, the "U" shaped base member may be provided with lift and tilt mechanisms 28, 30 whereby the trailer can be levelled from side to side or front to back.

EP 0 457 621 A1

This invention relates to boat trailers and in particular to boat parking trailers.

Boat trailers, as the name implies, are units designed to be pulled by tractors or the like and are capable of supporting a boat. Such boat trailers are employed at marinas and the like for loading, off-loading, launching or lifting boats to or from slipways, docks or the shore. In particular, such trailers may be used for parking boats on shore. The dimensions of the framework of the boat trailer normally place an upper limit on the size of boat that can be accomodated, but it has been proposed to produce a boat trailer adjustable in width so as to accomodate larger or smaller boats. However, previous proposals have suffered from the drawbacks that, firstly, the reduction of width available is not very great, and secondly on operating on less than maximum width many trailers have near their front end a transverse bar of length equal to the maximum width which inhibits manoeuvrability, particularly in restricted parking spaces.

The inventions seeks to provide a boat trailer improved in the above respects.

According to the present invention there is provided a boat trailer which comprises a base of generally U-shaped configuration in plan having wheels at or near the free ends of the "U" and traction means at or adapted to be attached to the bight end of the "U", means for supporting a boat and width adjusting means at or near the bight of the "U' characterised in that the width adjusting means comprise transverse arms together forming the bight of the "U" positioned out of the plane of the base and constrained to move in guide tube sections located at or near the point of attachment of the traction means.

The transverse arms are either positioned out of the plane of the base, or apertures are provided in the base to allow them to pass through. Preferably, the transverse arms are caused to move within the guide tube means by hydraulic or pneumatic cylinders. Since the arms are positioned out of, preferably below the general plane of the base, the amount of width reduction which is possible to obtain is very high, typically the width can be reduced down to less that 50% of maximum.

Another problem which occurs with trailers available hitherto is that of keeping the boat level on a sloping surface. This can be when parking, or, commonly, when the hoist is on an angled slipway lifting the boat from the water.

According to a second aspect of the present invention there is provided a boat trailer which comprises a base of generally U-shaped configuration in plan having wheels at or near the free end of the "U" and traction means at or adapted to be attached to the bight of the "U" and means for supporting the boat, characterised in that lift and tilt mechanisms are provided independantly at or near the free ends of the "U" whereby a boat on the trailer can be levelled from side to side or front to back.

Preferably, a trailer is constructed in accordance with both aspects of the invention.

The invention will be described further, by way of example, with reference to the accompanying drawings, in which:

Figure 1 is diagrammatic plan view of a boat parking trailer in accordance with the invention;

Figure 2 is a similar view to Figure 1 in the maximum width position;

Figure 3 is a side elevational view of the trailer of Figure 1; and

Figure 4 is a similar view to Figure 3 with a lifting cylinder retracted.

Referring to the drawings, a boat trailer generally designated 10 comprises a generally U-shaped base 12 consisting of side arms 14 and transverse arms 16. At the bight end of the "U" there is provided attachment for traction means in the form of a draw bar 18, and the free ends of the arms 14 are provided with wheels 20, which may be single, pairs in tandem, or pairs side by side. The boat (not shown) is supported by slings attached to parallel members 22 which in turn are pivotally attached to support 24 integral with the longitudinal arms 14. The wheels are supported on legs 26 slidable with the supports 24 and whose relative disposition is controlled by hydraulic or pneumatic cylinders 28. The front to rear degree of tilt of the members 22 with respect to the arms 14 is controlled by further cylinders 30 attached between the members and their respective supports 24.

The transverse arms 16 run in square section guide tubes 32 which constrain the former to move in a direction at right angles to the longitudinal asix of the trailer 10.

Cylinders 34 are positioned between respective guide tubes 32 and their associated side arms 14. It will be seen that the arms 16 (and the guide tubes 32) are located below the general plane of the base side arm members 14.

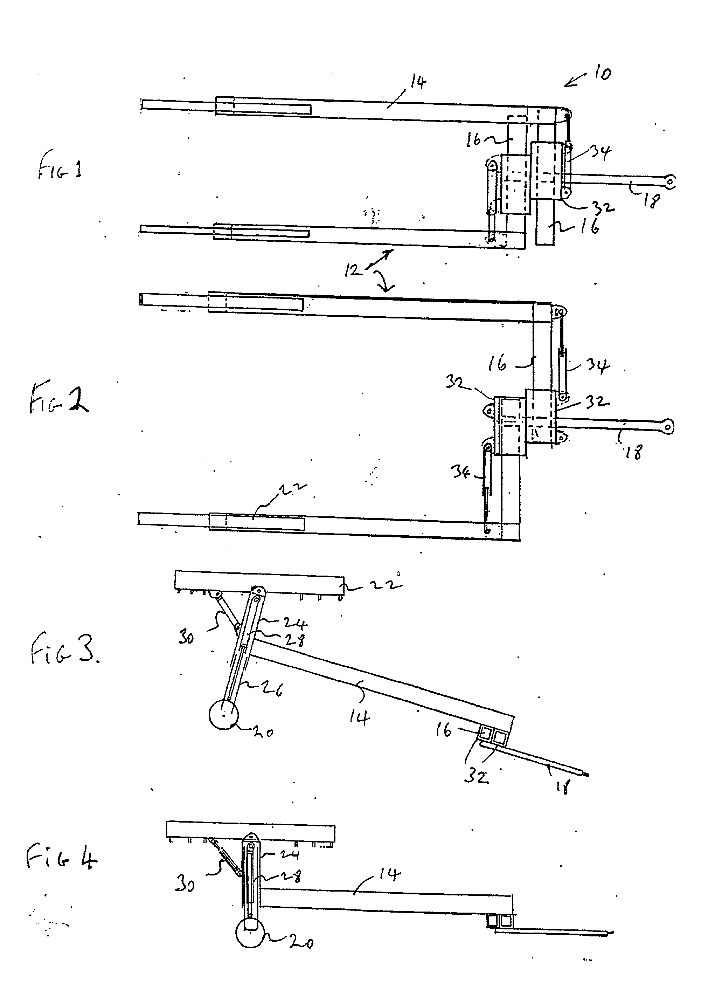

In operation, the width of the base 12 is set by operating the cylinders 34 so as to move the arms 14 towards or away from one another. The transverse arm 16 slides the guide tubes 32 and, as can be seen in Figure 1, since the arms 16 will pass underneath their respective opposite side arms 14, width reductions of over 50% can be achieved from the maximum width position as illustrated in Figure 2. Thus the trailer of the invention can support a wide variety of boat widths, and can furthermore be reduced in width when empty for easy transport. The cylinders 28 allow the height of each respective member 22 to be adjusted with respect to its associated wheel 20. Thus, if the boat trailer 10 is on a side to side slope one cylinder 28 can be adjusted so as to level up the members 22 and hence the boat. Similarly, if the trailer 10 is on front to back slope, for example on a slipway, the cylinders 30 can be adjusted so as to maintain the members 22 horizontal. The latter is particularly useful when picking up and depositing a boat in the water from a slipway. If desired, each of the sets of cylinders 28 and 30 can be operated in synchronisation.

While the trailer has been described with respect to members 22 capable of supporting slings from which the boat is suspended, it will be appreciated that the apparatus of the invention can be made of a lesser height, typically two to three feet from the ground, in which case the members 22 would carry pads on which the keel of the boat would rest rather than slings from which it is suspended. Furthermore, although the apparatus has been described in relation to lifting of boats, other, non-marine, applications are possible. For instance the apparatus could be used to move containers, portable cabins, machinery or other loads, and may be made in more compact forms for use in, e.g., factories where space is limited.

The trailer of the invention is simple, versatile and economic.

## Claims

1. A boat trailer which comprises a base of generally U-shaped configuration in plan having wheels at or near the free ends of the "U" and traction means at or adapted to be attached to the bight end of the "U", means for supporting a boat and width adjusting means at or near the bight of the "U" characterised in that the width adjusting means comprise transverse arms together forming the bight of the "U" positioned out of the plane of the base and constrained to move in guid tube sections located at or near the point of attachment of the traction means.

2. A trailer as claimed in claim 1 in which the transverse arms are either positioned out of the plane of the base or appertures are provided in the base to allow them to pass through.

3. A trailer as claimed in claim 2 in which the transverse arms are caused to move within the guide tube means by hydraulic or pneumatic cylinders.

4. A boat trailer which comprises a base of generally "U" shaped configuration in plan having wheels at or near the free end of the "U" and traction means at or adapted to be attached to the bight end of the "U" and means for supporting the boat, characterised in that lift and tilt mechanisms are provided independantly at or near the free ends of the "U" whereby a boat on the trailer can be levelled from side to side or front to back.

5. A trailer as claimed in claim 4 in which the lift and tilt mechanisms comprise hydraulic or pneumatic cylinders.

6. A trailer as claimed in either of claims 4 or 5 having wheels and in which the wheels are supported on legs slideable within support whose relative disposition is controlled by hydraulic or pneumatic cylinders whereby side to side tilting can be effected.

7. A trailer as claimed in claim 6 where further cylinders are attached between the wheel supports and boat support members whereby front to back tilting of the boat support member can be adjusted.

FIG 1

FIG 2

FIG 3.

FIG 4

EP 0 457 621 A1

European Patent Office

**EUROPEAN SEARCH REPORT**

Application Number

EP    91 30 4491

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | NL-A-8005665 (KNIJPSTRA KONSTRUKTIE) <br> * figures 1, 2 * <br> --- | 1-3 | B60P3/10 |
| X | FR-A-2383805 (FAUVEL) <br> * page 1-3; figures * <br> --- | 1, 2 | |
| A | GB-A-2133378 (WISE HANDLING) <br> * abstract; figures * <br> --- | 1 | |
| A | FR-A-2558118 (DESFILLES) <br> * abstract; figures * <br> ----- | 1 | |
| | | | **TECHNICAL FIELDS SEARCHED (Int. Cl.5)** |
| | | | B60P |

The present search report has been drawn up for all claims

| Place of search | Date of completion of the search | Examiner |
|---|---|---|
| THE HAGUE | 14 AUGUST 1991 | VANNESTE M.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5